# EUROPEAN PATENT APPLICATION

(11) **EP 2 508 451 A1**
(43) Date of publication of application: **10.10.2012**
(21) Application number: 12163470.3
(22) Date of filing: 05.04.2012
(51) Int. Cl.: B65G 41/00, B65G 67/08

(54) **Cargo handling system**

(30) Priority: 06.04.2011 IN MU11572011
(71) Applicant: Precision Automation and Robotics India Ltd., Pune 411041 MAH (IN)
(72) Inventor: Date, Ranjit, 411 041 Pune, Maharashtra (IN); Oza, Govind, 411 041 Pune, Maharashtra (IN)
(74) Representative: Pulieri, Gianluca Antonio

(57) **Abstract**

A cargo handling system (100) for handling cargo in an area (20) of operation is disclosed. The system comprises at least one extendable conveyor (10) having at least one fixed end and at least one movable end, at least one multi-axis means coupled with the extendable conveyor (10) to enable the conveyor to span the entire area of operation. The multi-axis means comprises, at least one linear movement means to control the linear movement of the conveyor, at least one pivotable two-axis means (30) to control lateral and vertical movement of the conveyor. Further the system comprises at least one two-axis loader cart (50) coupled with the extendable conveyor (10) and co-operating with the multi-axis means to minimize cantilever of the extendable conveyor and position the moving end of the conveyor (10) to a desired location and controlling means adapted to control the multi-axis means for automated operation of the extendable conveyor.

## Description

FIELD OF DISCLOSURE

The present disclosure generally relates to a cargo handling system.

More particularly, the present disclosure relates to an automatic and semi-automatic cargo handling system.

BACKGROUND

Cargo can either be regular (fixed or regulated sizes and shapes), or irregular (varying and un-defined sizes and shapes). Presently, the task of handling cargo during loading, un-loading and storing of cargo in vehicles, storage containers, pallets, bins, ware-housing and other intermediate storage and transit areas is either done manually, semi-automatically or automatically. In case of manual handling of cargo, a laborer carries cargo from an incoming location such as a finished packing line conveyor to a loading location such as a cargo area or container of a transport vehicle. However, this manual method of handling cargo is labor-intensive, inefficient, and highly time-consuming. In case of semi-automatic cargo handling system, an intermediate conveyor system is used between the incoming location and the loading location. However, the semi-automatic method of handling cargo still requires a lot of human effort and time as most of the cargo-picking, cargo-positioning and cargo placement work is still manual. In case of the automatic cargo handling system, the system automatically places cargo in place without any human intervention. However, the automatic cargo handling systems have the limitation of handling only loads and containers that are uniformly regular structured and sized and are precisely positioned. Furthermore, the present automated loading system also suffers from drawbacks such as high complexity and cost due to complex and precision mechanisms and precision requirements on cargo and containers.

Accordingly, there is a need for an automated cargo handling system that enables automated and close to target positioning of the cargo during loading, un-loading and storing of the cargo in vehicles, storage containers, pallets, bins, ware-housing and other intermediate storage and transit areas with minimum of manual intervention. Further, there is a need for an automated cargo handling system that makes use of simpler mechanisms, is easier and safe to operate, saves time and reduces operational costs.

OBJECTS

Some of the objects of the present disclosure are listed herein below.

The principle object of the present disclosure is to provide a cargo handling system that automatically handles cargo with minimum manual intervention.

Another obj ect of the present disclosure is to provide a cargo handling system that efficiently handles cargo of irregular shapes or sizes.

Another obj ect of the present disclosure is to provide a cargo handling system that makes use of relatively simple mechanisms.

Another obj ect of the present disclosure is to provide a cargo handling system that is safe, saves time and is cost-effective.

Another obj ect of the present disclosure is to provide a cargo handling system that handles cargo without a need for high precision requirements on the cargo.

Other objects and advantages of the present disclosure will be more apparent from the following description when read in conjunction with the accompanying figures, which are not intended to limit the scope of the present disclosure.

SUMMARY

A cargo handling system for handling cargo in an area of operation, the system comprising; at least one extendable conveyor comprising at least one fixed end and at least one movable end, at least one multi-axis means operatively coupled with the extendable conveyor and adapted to enable the conveyor to span the entire area of operation, the multi-axis means comprising, at least one linear movement means adapted to control linear movement of the conveyor, at least one pivotable two-axis means adapted to control lateral and vertical movement of the conveyor, at least one two-axis loader cart operatively coupled with the extendable conveyor and co-operating with the multi-axis means to minimize cantilever of the extendable conveyor and position the moving end of the conveyor to a desired location and controlling means adapted to control the multi-axis means for automated operation of the extendable conveyor.

Additionally, the movable end comprises a guiding means mounted at the tip to facilitate the placement and removal of cargo.

Typically, the linear movement includes means to move the conveyor diagonally.

Typically, rails are provided to support the pivotable two-axis means.

Typically, the two-axis loader cart is pivotably coupled to the extendable conveyor.

Preferably, the two-axis loader cart is adapted to move the extendable conveyor incrementally.

Typically, the two-axis loader cart is adapted to accommodate variation in the length of the extendable conveyor.

Additionally, at least one pair of ground mounted rails, ceiling mounted rails and wheels are provided to support the two-axis loader cart.

Additionally, the control system comprises a three-axis manual controlling means adapted to compensate for cargo positioning error and achieve correction of the cargo position on-the-fly on the extendable conveyor; the three-axis manual controlling means comprising at least one user interface; the user interface selected from the group comprising buttons and joysticks.

Additionally, the control system comprises safety features including safety sensors and switches.

Additionally, the two-axis loader cart comprises a three-axis linear means operatively coupled with the extendable conveyor, the three-axis linear means being selected from at least one of a gantry and a portal.

Additionally, the extendable conveyor comprises carriers or slots adapted to suspend the cargo there from.

Preferably, multiple cargo handling systems are adapted to be interlinked through selective combinations thereby facilitating the cargo handling systems to span the entire area of operation.

BRIEF DESCRIPTION OF THE ACCOMPANYING DRAWINGS

The disclosure will now be explained in relation to the accompanying drawings, in which:

Figure 1 (a) illustrates a top view of a cargo handling system provided with linearly extendible conveyor swiveling between side walls of cargo area or container of transport vehicle in accordance with an embodiment of the present disclosure;

Figure 1(b) illustrates a side view of a cargo handling system of figure 1(a), with linearly extendible conveyor swiveling between top and bottom of the entrance of cargo area or container of the transport vehicle in accordance with an embodiment of the present disclosure;

Figure 2 illustrates a side view of a cargo handling system of figure 1(a), with the linearly extendible conveyor in an extended configuration thereof in accordance with an embodiment of the present disclosure;

Figure 3(a) illustrates a moved loader of the cargo handling system with a fixed loading pivot for each in-feed point in accordance with an embodiment of the present disclosure;

Figure 3(b) illustrates a moved loader of the cargo handling system with a moved loading cart on rails in accordance with an embodiment of the present disclosure;

Figure 4 (a) illustrates a cargo handling system provided with a cart supported on ground mounted rails in accordance with an embodiment of the present disclosure;

Figure 4 (b) illustrates a cargo handling system provided with a cart supported on ceiling mounted rails in accordance with an embodiment of the present disclosure;

Figure 5 illustrates a cargo handling system provided with a wheeled vehicle cart in accordance with an embodiment of the present disclosure; and

Figure 6 illustrates a fixed loading point of the cargo handling system provided with a cart in a folded and parked position.

DETAILED DESCRIPTION OF ACCOMPANYING DRAWINGS

The invention will now be described with reference to the embodiments shown in the accompanying drawings. The embodiments do not limit the scope and ambit of the invention. The description relates purely to the exemplary preferred embodiments of the disclosed structure and its suggested applications.

The embodiments herein and the various features and advantageous details thereof are explained with reference to the non-limiting embodiments in the following description. Descriptions of well-known components and processing techniques are omitted so as to not unnecessarily obscure the embodiments herein. The examples used herein are intended merely to facilitate an understanding of ways in which the embodiments herein may be practiced and to further enable those of skill in the art to practice the embodiments herein. Accordingly, the examples should not be construed as limiting the scope of the embodiments herein.

The description herein after, of the specific embodiments will so fully reveal the general nature of the embodiments herein that others can, by applying current knowledge, readily modify and/or adapt for various applications such specific embodiments without departing from the generic concept, and, therefore, such adaptations and modifications should and are intended to be comprehended within the meaning and range of equivalents of the disclosed embodiments. It is to be understood that the phraseology or terminology employed herein is for the purpose of description and not of limitation. Therefore, while the embodiments herein have been described in terms of preferred embodiments, those skilled in the art will recognize that the embodiments herein can be practiced with modification within the spirit and scope of the embodiments as described herein.

The present disclosure relates to mechanized cargo handling system for pick up, transport and placement of cargo required in loading, unloading or storage application of cargo like boxes, bags, cases and drums into vehicles, storage containers, pallets or bins, warehousing and other intermediate storage and transit areas, in automatic and semiautomatic or assisted modes. In the present disclosure, the use of a multi-axis mechanism that enables automated and close to target positioning throughout the loading and unloading area with minimal manual intervention for small corrections, as well as on-the-fly (in operation) provision for mechanized corrections for the operator to overcome precision errors in the mechanism, cargo or container results in the use of simpler mechanisms with reduced costs.

This present disclosure is principally relating to various embodiments of a movable and extendable conveyor system, relatively fixed at one end (incoming point), and movable at the other end (delivery point). The relatively fixed point during operation enables ease of transfer or rigid connection to a single point delivery stream like a conveyor, carousel, stacker, indexer, or any other transportation or storage device with ability of single point or zone delivery. The movable point is moved by various multi-axis mechanisms (of which various embodiments are proposed in detailed description of the invention) to the targeted storage points, to where cargo is to be loaded while performing loading operation, and from where cargo is to be picked for unloading operation. The nearness of the position of the delivery point to the target loading/unloading point and also close matching of levels (height) of delivery to target enables a human loader to simply push or guide in position the cargo, with a very little effort or loss of time. In accordance with one embodiment, the system can be configured for fixed point for incoming cargo and movable point for delivery of the cargo as described above for cargo loading. In accordance with another embodiment, the movable point can be used for incoming cargo and fixed point for delivery of the cargo for cargo unloading. In accordance with another embodiment, for multi-point incoming cargo and multi-point outgoing cargo, a combination of two such systems can be used, where cargo can be picked from multi-point locations using movable incoming end, and the fixed delivery end can be connected to a fixed incoming end of another system which has a movable delivery end for multi-point placement. The fixed point itself can be moved to a desired location to match the incoming or transfer location of a single point system for multi-lane or multi-device operation, and then fixed for the handling operation. The multi-axis positioning mechanisms can be implemented on fixed locations (like loading docks of a factory/warehouse) or be made portable or mobile for loading in large areas, containers or transportation devices like ships, etc. such that they can be interlinked to span the entire area of operation through selective combinations & interlinking of such systems.

The cargo handling system is used for performing loading and unloading operations. More specifically, the present disclosure may be described with reference to cargo handling system used for loading or unloading of cardboard boxes into a cargo area of a truck, wherein the cardboard boxes are delivered from a finished packing line conveyor/incoming conveyor of a factory. The cargo handling system of the present disclosure can be used for close to target positioning of the cargo during loading, unloading and storing of the cargo into vehicles, storage containers, pallets, bins, ware-housing and other intermediate storage and transit areas with minimum of manual intervention. The cargo handling system of the present disclosure performs both loading and unloading operations in all combinations of single point and multi-point operations at both loading and unloading ends of the cargo. The cargo handling system is capable of handling any kind of cargo and can be used for application in a variety of vehicles, containers and spaces. The present disclosure is not limited to be used for a particular loading or unloading operation or a particular vehicle configuration.

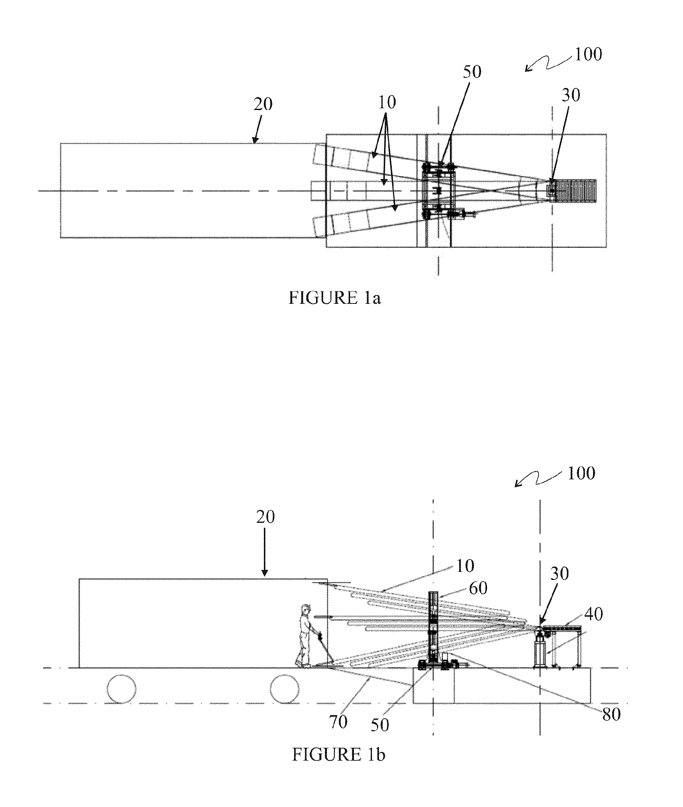

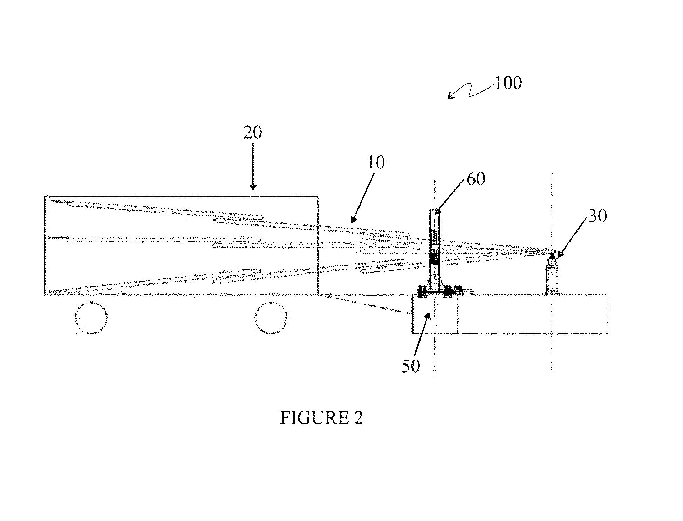

Referring to figure 1(a) of the accompanying drawings, a top view of a cargo handling system (100) with a linearly extendible conveyor (10) swiveling between side walls of the of a cargo area or container of a transport vehicle is illustrated. Further, referring to figure 1(b) of the accompanying drawings, a side view of a cargo handling system of figure 1(a) with the linearly extendible conveyor swiveling between top and bottom of the entrance of cargo area or container of the transport vehicle is illustrated. Referring to figure 2 of the accompanying drawings, a side view of the cargo handling system (100) with the linearly extendible conveyor in a fully extended configuration is illustrated.

The cargo handling system (100) is used for loading cargo from the incoming conveyor of the factory to the inside of a container or a cargo area (20) of the truck. The cargo handling system (100) is a three-axis robotic system that includes the linearly extendible conveyor (10) adapted to extend inside the container or cargo area (20) of the truck. More particularly, the linearly extendible conveyor (10) extends upto an entire length of the truck from front to back, including diagonal length of the truck. The linearly extendible conveyor (10) can be implemented in many embodiments like telescoping, multi-tier cascading, or folding linkages to achieve extension and contraction of the length of the linearly extendible conveyor (10). The linearly extendible conveyor (10) is mounted on a two-axis pivot (30) and is connected to an incoming point (40) at one end thereof such that distance between the incoming point (40) and the incoming conveyor is minimized and accordingly the cargo has to be moved by a very small distance for bringing the cargo to the linearly extendible conveyor (10) from an incoming conveyor, thereby substantially reducing human effort. As the linearly extendible conveyor (10) is mounted on a two-axis pivot (30), the pivot end of the linearly extendible conveyor (10) is relatively fixed, while the extendible end is adapted to be moved towards the fixed end, or away from the fixed end. In accordance with one embodiment of the present disclosure, the free end of the linearly extendible conveyor (10) is equipped with a wheeled and pivoted support for minimizing cantilever effect and permitting unobstructed vertical movement of the free end of the linearly extendible conveyor (10). Accordingly, the incoming point of loading (40) of the boxes remain fixed relative to the incoming conveyor and the cargo is transferred to the linearly extendible conveyor (10) of the cargo handling system (100) at an intake position (40) of the cargo handling system (100).

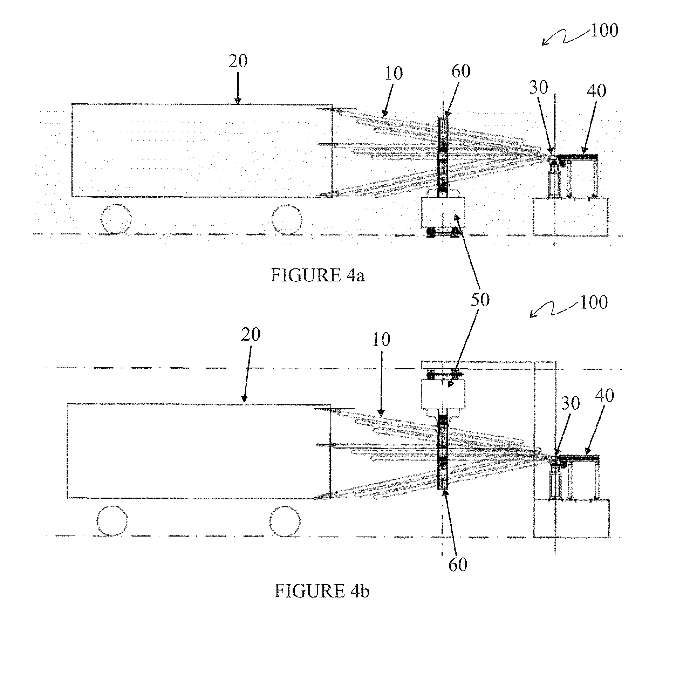

The cargo handling system (100) further includes a two-axis cart (hereinafter referred to as loader cart 50). The loader cart (50) is adapted to move the linearly extendible conveyor (10) up and down, as well as width-wise/lateral, in programmed or inching modes. The linearly extendible conveyor (10) is rested at loader cart (50) position to minimize cantilever of the conveyor (10) and the resting point is pivoted in two-axis as well as compliant in linear direction along the linearly extendible conveyor's axis for accommodation of the length variation resulting from arc-distance of lateral movement. In accordance with one embodiment of the present disclosure, the loader cart (50) can be floor-mounted as is illustrated in Figure 4(a). In accordance with another embodiment of the present disclosure, the loader cart (50) can be ceiling mounted or over head mounted as is illustrated in Figure 4(b).

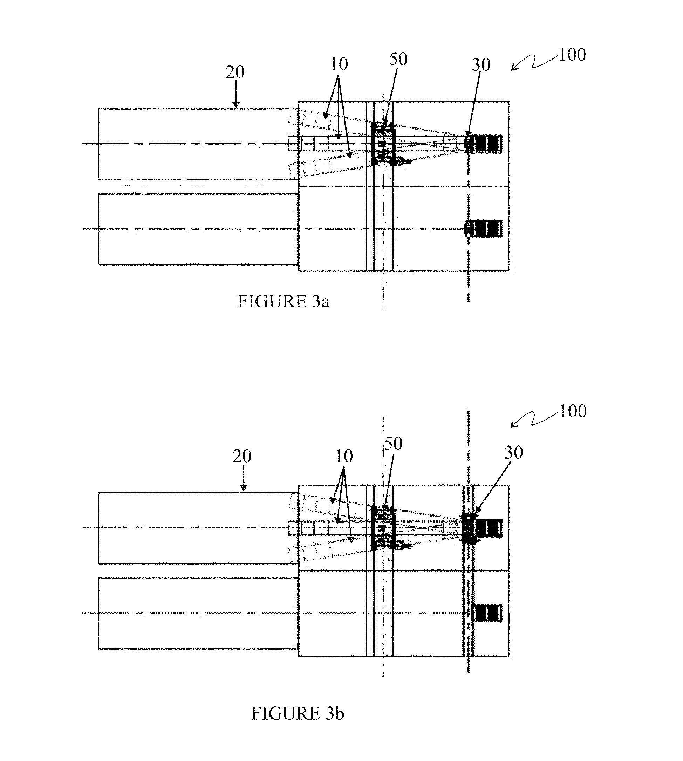

Referring to figure 3(a) of the accompanying drawings, a moved loader of the cargo handling system with fixed loading pivot for each in-feed point is illustrated. Further, referring to figure 3(b) of the accompanying drawings, a moved loader of the cargo handling system with moved loading cart on rails is illustrated.

The free end of the linearly extendible conveyor (10) of the cargo handling system (100) is adapted to reach any point inside the cargo area of the truck for delivering the cargo to that point inside the truck. The linearly extendible conveyor (10) is manipulated to facilitate the free end of the linearly extendible conveyor (10) in reaching a specific delivery point inside the truck. More specifically, the linearly extendible conveyor (10) is adapted to horizontally pivot to cover width of the truck and as the loader cart (50) lifts the linearly extendible conveyor (10), the delivery end of the linearly extendible conveyor (10) moves up and as the loader cart (50) lowers the linearly extendible conveyor (10), the delivery end of the linearly extendible conveyor (10) moves down. Accordingly, the lifting and lowering of the linearly extendible conveyor (10) by the loader cart (50) is accomplished with the lifter (60) with pivot having 3 degrees of freedom that facilitates the delivery end of the linearly extendible conveyor (10) to reach lower-most and upper-most levels during the stacking the cargo boxes inside the cargo area of the truck, as is illustrated in figure 1(b) and figure 2 of the accompanying drawings. Further, the width-wise/lateral movement of the loader cart (50) facilitates horizontal movement of the delivery point of the linearly extendible conveyor (10), thereby enabling the delivery point of the linearly extendible conveyor (10) to span an entire width of the truck. Again due to the fixed pivot end at the incoming end (40) of the cargo handling system (100), there is relatively little distance between the incoming point (40) and the incoming conveyor and accordingly the cargo has to be moved by very less distance for bringing the cargo to the linearly extendible conveyor (10) from the incoming conveyor, thereby substantially reducing the human effort. All the three motions, length-wise/horizontal (extendible length of the conveyor 10), width-wise/lateral (motion of the cart in width-wise direction), and the vertical (lifting of the cart along the vertical axis) are motorized, and may be made programmable for a fully automatic operation. The programmable motions with or without position feedback and control, and with a varying level of mechanical precision can be used to accomplish fully automatic and precise operations at one end of the performance spectrum and a coarse positioning requiring manual intervention for push and guide operation of the cargo box for final positioning of the cargo box at the other end of the performance spectrum. All the above mentioned actions of the cargo handling system are controlled by the control system (80) as illustrated in figure 1(b). The cargo handling system is further provided with a dock with folding platform (70) as illustrated in figure 2.

The operation of the cargo handling system (100) can therefore be done fully automatically where all boxes are sequentially placed as per pre-programmed or configurable sequence of stacking, or interactively with the operator to enable the operator to push, guide and place each box in position with a minimal effort. For operator assisted or semi-automatic operation of the cargo handling system (100), an additional conveyance or transfer segment allowing the operator to guide or push the cargo out of the cargo handling system (100) may be mounted at a tip of the linearly extendible conveyor (10). The tip segment can be relatively movable for manual alignment of the cargo, and also can be provided with the safety switches to avoid crushing of the operator while the linearly extendible conveyor (10) is indexing.

The control system (80) used in the cargo handling system (100) supports fully automatic operation of the cargo handling system (100) with programmed sequences or programmed cycles that can be configured for different load and container sizes and shapes, or a mix of loads in a single container. In order to compensate for the non-precise loads, containers, and positioning errors in the mechanism, a three-axis control handle in form of buttons, joysticks, or any other user interface may be provided. More specifically, the three-axis control handle enables giving of three-axis incremental commands to the control system. In order to implement corrections, the position is corrected to new reference, so that it does not need to be repeatedly applied. However, it can also be applied singularly to correct specific size variation issues for the specific cargo being loaded.

The cargo handling system (100) can also be operated in semi-automatic mode, where the cargo handling system (100) provides a placement position coarse movement from the approximation of the position possible, whereas precise position for each box needs to be made by the operator individually. This is typically required for lose and irregular cargo.

The control system (80) used in the cargo handling system (100) is required to implement safety provisions for ensuring safety of the operator, while the various mechanisms of the cargo handling system (100) are moving. In order to ensure safety of the operators, one or more combinations of safety sensors for detecting collisions or crushing forces are provided. Further, provision is provided for stopping movement of the linearly extendible conveyor (10), in case of an emergency. Particularly, "dead-man" controls are provided in the hand of the operator to enable him to instantly stop the motion of the linearly extendible conveyor (10). Furthermore, physical guards with soft material or spring loaded bumpers are disposed on the linearly extendible conveyor (10) for reducing the impact, in case of a collision.

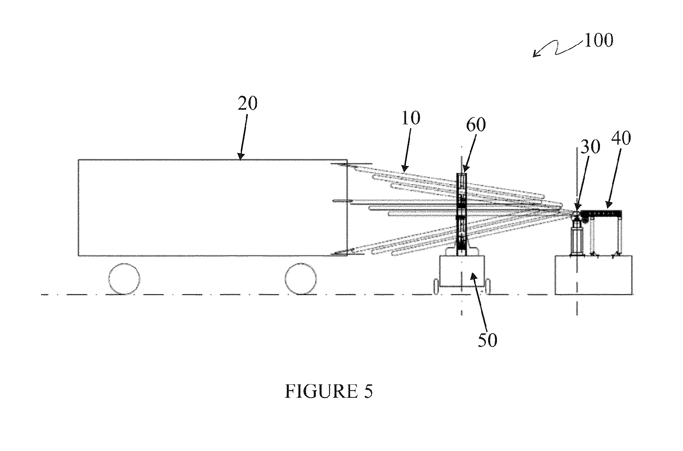

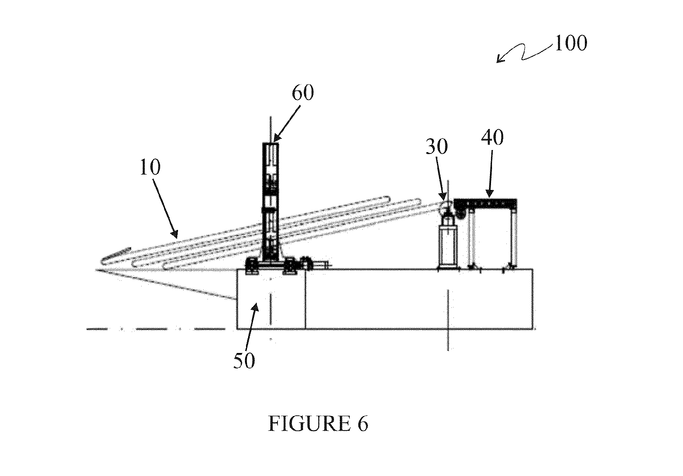

The cargo handling system (100) includes a wheeled cart (50) that is adapted to move on rails. The wheeled cart (50) of the cargo handling system is provided with a lifter (60) with pivot having 3 degrees of freedom that facilitates in vertical movement of the linearly extendible conveyor (10), thereby assisting the conveyor (10) in reaching lower-most and upper-most levels inside the cargo area or container of the transport vehicle. Using a vehicle based cart as in Figure 5, the entire arrangement can be made portable, and can be moved to accomplish cargo handling task in any indoor or outdoor environment like ports, railways, wagons, containers. Further, the cargo handling system (100) along with the conveyor (10) and the wheeled cart (50) are adapted to take up a folded configuration as is illustrated in the figure 6 of the accompanying drawings, so as to minimize the space occupied by the handling system.

In accordance with another embodiment of the present disclosure, a three linear axis mechanism like gantry can be used instead of using a pivoted mechanism on the cart, for positioning of the linearly extendible conveyor (10), whereas only a pivoted incoming conveyor is linked to feed the feeding end of the linearly extendible conveyor (10), which is now itself movable. Many other configurations of axis can achieve the three degrees of freedom required for spanning the loading space, which can be similarly configured by allowing pivoted movements of feeding conveyor to connect to the feeding point on extendible mechanism of the linearly extendible conveyor (10).

In accordance with still another embodiment of the present disclosure, the linearly extendible conveyor (10) can be provided with carriers or slots in which the cargo can be held or hung from the top, instead of resting on the bottom like in case of the above embodiment. This allows the cargo to be moved directly on the top of the placement position, such that when disconnected from the linearly extendible conveyor (10), it can be placed at its final position. This embodiment is better suited when there is sufficient space available on the top of the stacked layers from where the loads can be released.

In accordance with still another embodiment of the present disclosure, the two pivoted movements can be split between fixed pivot and loader cart (50), such that one segment pivoted at the incoming end of the conveyor makes the conveyor swing side to side when the loader cart (50) moves, but does not move this conveyor up and down. The second conveyor is pivoted to tilt up and down at the cart, and receives the cargo from the first conveyor. This conveyor, however, does not move from side to side, thus up down and side to side movements are achieved by two distinct conveyor segments each pivoted only in a single axis.

Each of the above embodiments can also be used in combinations, as such combinations are advantageous for specific lengths, configurations, and sizes of the cargo & loading areas.

Further, the cargo handling system (100) of the present disclosure can be configured for applications such as handling cargo between fixed points, multi-points and a combination of such loading and unloading applications.

TECHNICAL ADVANTAGES AND ECONOMIC SIGNIFICANCE

The technical advancements offered by the present disclosure include the realization of:
- automatic handling of cargo with least manual intervention;
- efficient handling of cargo of irregular shapes or sizes;
- cargo handling system that makes use of simpler mechanisms;
- cargo handling system that is safe;
- time required for loading and unloading of the cargo is minimized;
- cost effective cargo handling system;
- cargo handling system that handles cargo without a need for high precision requirements on the cargo or the containers;

Throughout this specification the word "comprise", or variations such as "comprises" or "comprising", will be understood to imply the inclusion of a stated element, integer or step, or group of elements, integers or steps, but not

the exclusion of any other element, integer or step, or group of elements, integers or steps.

The use of the expression "at least" or "at least one" suggests the use of one or more elements, as the use may be in one of the embodiments to achieve one or more of the desired objects or results.

The numerical values mentioned for the various physical parameters, dimensions or quantities are only approximations and it is envisaged that the values higher/lower than the numerical values assigned to the parameters, dimensions or quantities fall within the scope of the disclosure, unless there is a statement in the specification specific to the contrary.

While considerable emphasis has been placed herein on the particular features of this disclosure, it will be appreciated that various modifications can be made, and that many changes can be made in the preferred embodiment without departing from the principles of the disclosure. These and other modifications in the nature of the disclosure or the preferred embodiments will be apparent to those skilled in the art from the disclosure herein, whereby it is to be distinctly understood that the foregoing descriptive matter is to be interpreted merely as illustrative of the disclosure and not as a limitation.

## Claims

1. A cargo handling system for handling cargo in an area of operation, said system **characterized in that**:
• at least one extendable conveyor; said extendable conveyor comprising at least one fixed end and at least one movable end;
• at least one multi-axis means; said multi-axis means operatively coupled with said extendable conveyor adapted to enable the conveyor to span the entire area of operation;
said multi-axis means comprising:
- at least one linear movement means adapted to control linear movement of said conveyor;
- at least one pivotable two-axis means adapted to control lateral and vertical movement of said conveyor;
• at least one two-axis loader cart operatively coupled with said extendable conveyor and co-operating with said multi-axis means to minimize cantilever of said extendable conveyor and position the moving end of said conveyor to a desired location; and
• controlling means adapted to control said multi-axis means for automated operation of said extendable conveyor.

2. The cargo handling system as claimed in claim 1, wherein said movable end comprises a guiding means mounted at the tip to facilitate the placement and removal of cargo.

3. The cargo handling system as claimed in claim 1, wherein said linear movement includes means to move said conveyor diagonally.

4. The cargo handling system as claimed in claim 1, wherein rails are provided to support said pivotable two-axis means.

5. The cargo handling system as claimed in claim 1, wherein said two-axis loader cart is pivotably coupled to said extendable conveyor.

6. The cargo handling system as claimed in claim 1, wherein said two-axis loader cart is adapted to move said extendable conveyor incrementally.

7. The cargo handling system as claimed in claim 1, wherein said two-axis loader cart is adapted to accommodate variation in the length of said extendable conveyor.

8. The cargo handling system as claimed in claim 1, wherein at least one pair of ground mounted rails, ceiling mounted rails and wheels are provided to support said two-axis loader cart.

9. The cargo handling system as claimed in claim 1, wherein said control system comprises a three-axis manual controlling means adapted to compensate for cargo positioning error and achieve correction of the cargo position on-the-fly on said extendable conveyor; said three-axis manual controlling means comprising at least one user interface; said user interface selected from the group comprising buttons and joysticks.

10. The cargo handling system as claimed in claim 1, wherein said control system comprises safety features including safety sensors and switches.

11. The cargo handling system as claimed in claim 1, wherein said two-axis loader cart comprises a three-axis linear means operatively coupled with said extendable conveyor, said three-axis linear means being selected from at least one of a gantry and a portal.

12. The cargo handling system as claimed in claim 1, wherein said extendable conveyor comprises carriers or slots adapted to suspend the cargo there from.

13. The cargo handling system as claimed in claim 1, wherein multiple cargo handling systems are adapted to be interlinked through selective combinations thereby facilitating said cargo handling systems to span the entire area of operation.
